# EUROPÄISCHE PATENTANMELDUNG

(11) **EP 2 811 349 A1**
(43) Veröffentlichungstag der Anmeldung: **10.12.2014**
(21) Anmeldenummer: 13170440.5
(22) Anmeldetag: 04.06.2013
(51) Int. Cl.: G05B 19/042

(54) **Verfahren zum Betreiben eines Automatisierungssystems**

(71) Anmelder: Siemens Aktiengesellschaft, 80333 München (DE)
(72) Erfinder: Meilland, Gerald, 67630 Lauterbourg (FR)

(57) **Zusammenfassung**

Die Erfindung betrifft ein Verfahren zum Betreiben eines Automatisierungssystems (1), das ein Automatisierungsgerät (6), ein Operator-System (3) und ein Engineering-System (2) aufweist, wobei während einer Projektierung und Inbetriebnahme mittels eines grafischen Editors des Engineering-Systems (2) aus Objekten eine Automatisierungslösung (7) für das Automatisierungsgerät (6) erstellt wird, und nach der Erstellung der Automatisierungslösung (7) mittels des Engineering-Systems (2) aus dieser Automatisierungslösung (7) durch das Automatisierungsgerät (6) verarbeitbare Automatisierungsobjekte (9) erzeugt und in das Automatisierungsgerät (6) geladen werden. Es werden Maßnahmen vorgeschlagen, mittels welcher während eines Runtime-Betriebs des Automatisierungsgerätes (6) eine Online-Darstellung der Automatisierungslösung (7) ermöglicht wird.

## Beschreibung

Die Erfindung betrifft ein Verfahren zum Betreiben eines Automatisierungssystems, das ein Automatisierungsgerät, ein Operator-System und ein Engineering-System aufweist, wobei während einer Projektierung und Inbetriebnahme mittels eines grafischen Editors des Engineering-Systems aus Objekten eine Automatisierungslösung für das Automatisierungsgerät erstellt wird, und nach der Erstellung der Automatisierungslösung mittels des Engineering-Systems aus dieser Automatisierungslösung durch das Automatisierungsgerät verarbeitbare Automatisierungsobjekte erzeugt und in das Automatisierungsgerät geladen werden. Darüber hinaus betrifft die Erfindung ein Automatisierungssystem zur Durchführung des Verfahrens.

Aus dem Siemens-Katalog ST PCS 7, Kapitel 2, Ausgabe Juni 2012 ist ein Prozessleitsystem mit einem Engineering-System bekannt, welches insbesondere vorgesehen ist zum Konfigurieren von Hard- und/oder Softwarekomponenten, zum Projektieren von Kommunikationsnetzwerken, zum Projektieren von kontinuierlichen und sequenziellen Prozessabläufen, ferner zum Design von Bedien- und Beobachtungsstrategien sowie zum Erstellen eines Steuerprogramms für Chargen- bzw. Batchprozesse. Mittels eines auf diesem Engineering-System ablauffähigen grafischen Editors, beispielsweise mittels eines grafischen Editors in Form eines so genannten "Continuous Function Chart (CFC)", erstellt ein Anwender aus vorgefertigten Bausteinen (Objekten) nach Maßgabe einer zu lösenden Automatisierungsaufgabe eine Automatisierungslösung bzw. ein Anwender- oder Steuerprogramm - eine Gesamt-Software-Struktur - für ein Automatisierungsgerät des Prozessleitsystems. Dazu wählt der Anwender die Bausteine bzw. Objekte, z. B. ein Regler- oder - Zähler-Baustein aus einem verfügbaren Bausteinvorrat aus, platziert die Bausteine z. B. per Drag&Drop in einem Funktionsplan (z. B. CFC-Plan) und verschaltet diese per Mausklick miteinander. Unter dem Begriff "verschalten" wird verstanden, dass z. B. für die Kommunikation zwischen den Bausteinen Werte von einem Ausgang eines Bausteins zu einem oder mehreren Eingängen eines oder mehrerer Bausteine übertragen werden. Nachdem der Anwender alle Funktionen im Funktionsplan erstellt hat, erzeugt das Engineering-System mittels des Automatisierungsgerätes lesbare Automatisierungsobjekte, die in dieses Automatisierungsgerät geladen und dort im Rahmen der Steuerung eines technischen Prozesses bzw. zur Lösung der Automatisierungsaufgabe verarbeitet werden.

Es wird darauf hingewiesen, dass unter dem Begriff "Objekte" des grafischen Editors des Engineerings-Systems nicht nur Bausteine eines CFC-Plans zu verstehen sind. Darunter sind beispielsweise auch Schritte und Transitionen eines so genannten "Sequential Function Chart (SFC)" zu verstehen. Ein SFC ermöglicht eine grafische Projektierung und Inbetriebnahme von Ablaufsteuerungen, die in ein Automatisierungsgerät geladen und dort ausgeführt werden. Diese Ablaufsteuerungen sind für eine zustandsgesteuerte oder ereignisgesteuerte Ausführung von Produktionsprozessen auf Basis von Ablaufketten vorgesehen.

Es kann vorkommen, dass während der Steuerung eines technischen Prozesses (Runtime-Betrieb) ein Anwender die auf der Anzeigeeinheit des Engineerings-System dargestellte Automatisierungslösung ändert bzw. modifiziert, indem der Anwender z. B. Parameter eines Reglers ändert. Dies bedeutet, falls die zu dieser modifizierten Automatisierungslösung korrespondierenden Automatisierungsobjekte noch nicht in das Automatisierungsgerät geladen worden sind, dass die auf dem Engineering-System dargestellte Version (CFC-Plan) nicht mit der im Automatisierungsgerät hinterlegten Version (Runtime-Version) übereinstimmt; die Runtime-Version ist dem Anwender nicht zugänglich.

Häufig ist es erwünscht, die grafischen Objekte der mittels des grafischen Editors erstellten Automatisierungslösung auch in Form von grafischen Bild-Bausteinen - z. B. Ventile, Motoren, Heizkessel - auf einem Operator-System bzw. einem Bedien- und Beobachtungsgerät darzustellen bzw. zu visualisieren. Das Engineering-System ist daher gewöhnlich dazu ausgebildet, aus den grafischen Objekten Bild-Bausteine für das Operator-System zu erzeugen und diese Bild-Bausteine zur Darstellung bzw. Visualisierung auf dem Operator-System in dieses Operator-System zu laden. Mittels derartiger Bild-Bausteine kann zwar während der Steuerung eines technischen Prozesses (Runtime-Betrieb) der Prozess beobachtet und bedient werden, allerdings ist eine Online-Darstellung des Steuerprogramms bzw. der Automatisierungslösung nicht möglich.

Der Erfindung liegt daher die Aufgabe zugrunde, ein Verfahren der eingangs genannten Art anzugeben, mittels welchem während eines Runtime-Betriebs des Automatisierungsgerätes eine Online-Darstellung der Automatisierungslösung ermöglicht wird. Ferner ist ein Automatisierungssystem zu schaffen, das zur Durchführung des Verfahrens geeignet ist.

Diese Aufgabe wird im Hinblick auf das Verfahren durch die im kennzeichnenden Teil des Patentanspruchs 1 angegebenen, bezüglich des Automatisierungssystems durch die im kennzeichnenden Teil des Patentanspruchs 2 angegebenen Maßnahmen gelöst.

Vorteilhaft ist, dass die in das Operator-System geladene Automatisierungslösung stets konsistent mit der im Automatisierungsgerät abzuarbeitenden Automatisierungslösung ist. Dem Anwender wird die im Engineering-System projektierte Lösung im Operator-System angezeigt, welches ohnehin zum Bedienen und Beobachten des zu steuernden Prozesses im Runtime-Betrieb vorgesehen ist.

Die Erfindung geht von der Idee aus, dem Anwender auf dem Operator-System zunächst eine im Wesentlichen 1:1-Abbildung der Objekte der Automatisierungslösung bereitzustellen, die der Anwender mittels des grafischen Editors des Engineering-Systems erstellt hat, wobei anschließend das Automatisierungsgerät im Runtime-Betrieb das Operator-System mit Prozesswerten und Prozessparametern zur Aktualisierung der angezeigten Automatisierungslösung versorgt.

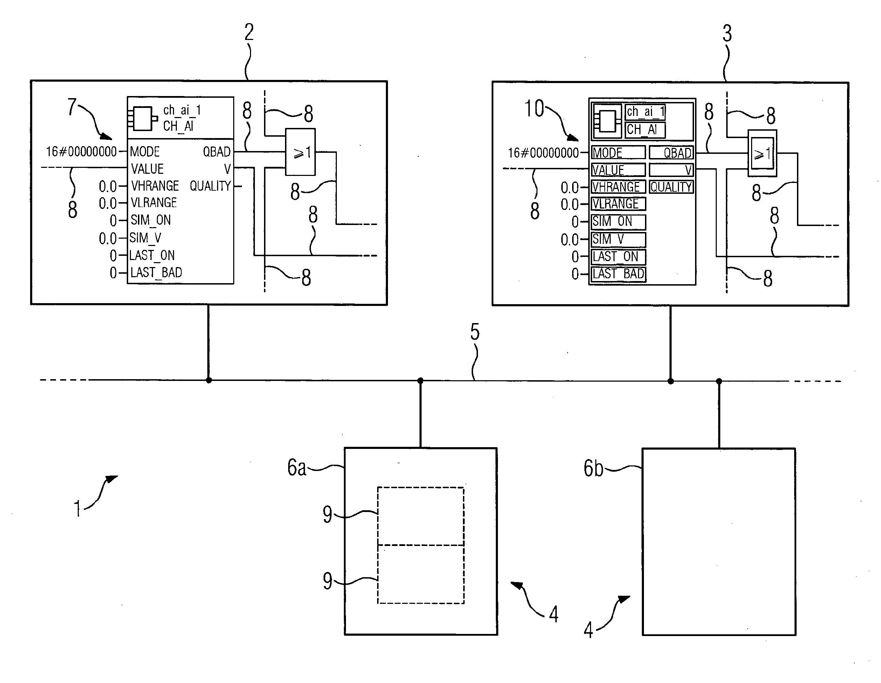

Die Erfindung wird nachfolgend anhand eines Ausführungsbeispiels unter Bezugnahme auf die einzige Figur der Zeichnung näher erläutert. Die Figur der Zeichnung zeigt in vereinfachter Form Bestandteile eines Automatisierungssystems.

Bestandteile eines Automatisierungssystems 1 sind ein Engineering-System 2, ein Operator-System 3 sowie eine Automatisierungseinrichtung 4, wobei das Engineering-System 2 zur Projektierung und/oder Konfigurierung der Automatisierungseinrichtung 4 vorgesehen ist. Die Automatisierungseinrichtung 4, welche über ein Bussystem 5 und hier nicht dargestellte Busanschaltungen mit dem Engineering-System 2 und dem Operator-System 3 verbunden ist, umfasst unterschiedliche Automatisierungsgeräte 6a, 6b, ..., ferner hier nicht dargestellte Aktoren und Sensoren sowie weitere zur Steuerung einer technischen Anlage erforderliche Automatisierungskomponenten. Die Automatisierungsgeräte 6a, 6b, ..., welche über das Bussystem 5 und/oder weitere geeignete Bussysteme miteinander verbunden sind, können unterschiedlich ausgebildet sein. So sind gewöhnlich Automatisierungsgeräte 6a, 6b, ... zur Lösung kleiner, mittlerer und größerer Automatisierungsaufgaben innerhalb der Automatisierungseinrichtung 4 vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind.

Mit welchen Hard- und Softwarekomponenten, d. h. mit welchen Automatisierungsgeräten, Operator-Systemen, Bussystemen, Aktoren und Sensoren, und mit welchen Steuer- bzw. Anwenderprogrammen die Automatisierungseinrichtung 4 zu versehen ist, ist abhängig von der Komplexität der zu steuernden technischen Anlage und der Steueraufgabe, wobei die erforderlichen Hard- und Softwarekomponenten der Automatisierungseinrichtung 4 durch das Engineering-System 2 projektierbar und/oder konfigurierbar sind.

Es wird im Folgenden angenommen, dass ein Anwender mittels eines grafischen Editors in Form einer an sich bekannten Continuous Function Chart-Software (CFC-Software) aus Bausteinen ein Steuerprogramm bzw. eine Automatisierungslösung nach Maßgabe einer zu lösenden Automatisierungsaufgabe erstellt hat, wobei der Einfachheit halber im Ausführungsbeispiel lediglich ein Ausschnitt dieser Lösung als CFC-Plan 7 gezeigt ist, der auf einer Anzeigeeinheit des Engineering-Systems 2 dargestellt ist. Diesen CFC-Plan 7 erstellt der Anwender, indem er Bausteine aus vorgefertigten Bausteinen eines verfügbaren Bausteinvorrats auswählt, diese per Drag&Drop in einem dargestellten Zeichenblatt platziert bzw. positioniert und die ausgewählten und platzierten Bausteine miteinander verschaltet, was im Beispiel mit Verschaltungen 8 dargestellt ist. Nachdem der Anwender den CFC-Plan erstellt hat, erzeugt die CFC-Software aus dem CFC-Plan für die Automatisierungsgeräte 6a, 6b, ... verarbeitbare Automatisierungsobjekte, wobei im Ausführungsbeispiel angenommen wird, dass die CFC-Software aus dem CFC-Plan 7 Automatisierungsobjekte 9 in einem geeignetem Maschinencode für das Automatisierungsgerät 6a erstellt und in dieses Automatisierungsgerät 6a über den Bus 5 geladen hat. Ferner erzeugt die CFC-Software des Engineering-Systems 2 ein im Wesentlichen 1:1-Abbild 10 dieses CFC-Plans 6, wobei dieses Abbild 10 mittels der CFC-Software zur Darstellung auf einer Anzeigeeinheit des Operator-Systems 3 in dieses Operator-System 3 geladen wird. Während eines Runtime-Betriebs des Automatisierungsgerätes 6 steht dieses mit dem Operator-System 3 derart in Wirkverbindung, dass das Automatisierungsgerät 6a dem Operator-System 3 Änderungen an den Ein- und Ausgängen der Automatisierungsobjekte 9 übermittelt, wobei das Operator-System 3 diese Änderungen im Abbild 10 anzeigt. Für den Fall, dass beispielsweise in den Automatisierungsobjekten 9 sich der ein Wert eines Eingangs ändert, welcher dem des Abbildes 10 entspricht, z. B. ein Eingang "SIM_ON" oder "LAST_ON", so wird diese Änderung im Abbild 10 angezeigt. Somit ist während des Runtime-Betriebs des Automatisierungsgerätes 6a eine Online-Darstellung der Automatisierungslösung sichergestellt.

## Patentansprüche

1. Verfahren zum Betreiben eines Automatisierungssystems (1), das ein Automatisierungsgerät (6), ein Operator-System (3) und ein Engineering-System (2) aufweist, wobei während einer Projektierung und Inbetriebnahme
- mittels eines grafischen Editors des Engineering-Systems (2) aus Objekten eine Automatisierungslösung (7) für das Automatisierungsgerät (6) erstellt wird,
- nach der Erstellung der Automatisierungslösung (7) mittels des Engineering-Systems (2) aus dieser Automatisierungslösung (7) durch das Automatisierungsgerät (6) verarbeitbare Automatisierungsobjekte (9) erzeugt und in das Automatisierungsgerät (6) geladen werden,
**dadurch gekennzeichnet,**
- **dass** ferner nach der Erstellung der Automatisierungslösung (7) mittels des Engineering-Systems (2) ein Abbild (10) dieser Automatisierungslösung (7) zur Darstellung auf dem Operator-System (3) in dieses Operator-System (3) geladen wird,
- **dass** während eines Runtime-Betriebs des Automatisierungsgerätes (6) mittels des Automatisierungsgerätes (6) Änderungen an den Automatisierungsobjekten (9) dem Operator-System (3) übermittelt werden, wobei mittels des Operator-Systems (3) die Änderungen im Abbild (10) angezeigt werden.

2. Automatisierungssystem mit einem Automatisierungsgerät (6), einem Operator-System (3) und einem Engineering-System (2), wobei zum Projektieren und zur Inbetriebsetzung des Automatisierungsgerätes (6),
- das Engineering-System (2) einen grafischen Editor aufweist, der zum Erstellen einer Objekte aufweisenden Automatisierungslösung (7) für das Automatisierungsgerät (6) vorgesehen ist,
- das Engineering-System (2) dazu ausgebildet ist, nach der Erstellung der Automatisierungslösung (7) aus dieser Automatisierungslösung (7) durch das Automatisierungsgerät (6) verarbeitbare Automatisierungsobjekte (9) zu erzeugen und in das Automatisierungsgerät (6) zu laden,
**dadurch gekennzeichnet, dass**
- das Engineering-System (2) dazu ausgebildet ist, nach der Erstellung der Automatisierungslösung (7) ein Abbild (10) dieser Automatisierungslösung (7) in das Operator-System (3) zu laden,
- das Operator-System (3) dazu ausgebildet ist, das Abbild (10) anzuzeigen,
- das Automatisierungsgerät (6) dazu ausgebildet ist, während eines Runtime-Betriebs des Automatisierungsgerätes (6) Änderungen an den Automatisierungsobjekten (9) dem Operator-System (3) zu übermitteln, und
- das Operator-System (3) ferner dazu ausgebildet ist, die Änderungen im Abbild (10) anzuzeigen.
